# EUROPÄISCHE PATENTANMELDUNG

(11) **EP 1 308 260 A1**
(43) Veröffentlichungstag der Anmeldung: **07.05.2003**
(21) Anmeldenummer: 02024758.1
(22) Anmeldetag: 06.11.2002
(51) Int. Cl.: B29C 45/40, B29C 45/26, B29C 45/43

(54) **Verfahren und Vorrichtung zur Herstellung von Spritzgussformteilen**

(30) Priorität: 06.11.2001 DE 10154447
(71) Anmelder: Lippert, Ehrenfried, 63755 Alzenau-Michelbach (DE)
(72) Erfinder: Lippert, Ehrenfried, 63755 Alzenau-Michelbach (DE)
(74) Vertreter: Schubert, Siegmar, Dipl.-Ing.

(57) **Zusammenfassung**

Bei einem Kunststoffspritzverfahren zum Spritzen von einseitig offenen Hohlkörpern als Formteile, wird jeweils ein Formteil zwischen einem inneren Kern (5) und einem äußeren Nestteil (10) gespritzt und anschließend das Formteil von dem Nestteil (10) und dem Kern (5) getrennt. Um das Ausdrücken oder Entfernen des gespritzten Formteils aus der Spritzform in unkomplizierter Weise zu gewährleisten, erfolgt das Spritzen des Formteils von dessen Innenseite her und nach dem Spritzen des Formteils wird dieses zusammen mit dem Nestteil (10) von dem Kern (5), der ortsfest gehalten wird, abgezogen. Anschließend wird das Formteil aus dem Nestteil (10) ausgedrückt.

## Beschreibung

Die Erfindung betrifft ein Kunststoffspritzverfahren zum Spritzen von einseitig offenen Hohlkörpern als Formteile, nach dem Oberbegriff des Anspruchs 1.

Nach dem erfindungsgemäßen Kunststoffspritzverfahren bzw. mit entsprechenden Werkzeugen in einer Spritzgußmaschine sollen allgemein einseitig offene Hohlkörper aus Kunststoff, einem Thermoplast, gespritzt werden. Spezieller sollen das Kunststoffspritzverfahren und die Werkzeuge zum Spritzen solcher einseitig offenen Hohlkörper geeignet sein, die außen selbst starke Hinterschneidungen aufweisen. Die entsprechenden Formteile können annähernd pyramidenstumpfförmig oder kegelstumpfförmig sein. Weiter bevorzugt sollen damit Blumenkasten und Töpfe gespritzt werden können. Die Formteile, insbesondere Blumenkasten und Töpfe, sollen dabei u.a. aus ästhetischen Gründen eine Struktur mit erheblichen Hinterschneidungen, z.B. Ringe in deren Außenwand, aufweisen.

Zum Stand der Technik (z.B. US 3671159) gehörende übliche Kunststoffspritzverfahren gemäß dem Oberbegriff des Anspruchs 1, die sich allerdings nur zum Spritzen von Formteilen mit glatten Wänden ohne Hinterschneidungen eignen, beruhen darauf, daß das Formteil von außen, also von dessen Boden aus, zwischen einem inneren Kern und einem äußeren Nestteil gespritzt wird, wobei die Spritzmasse einen hohlen Formraum zwischen dem Kern und dem Nestteil ausfüllt, und anschließend das Formteil von dem Nestteil und dem Kern getrennt wird, indem zunächst der Kern aus dem noch in dem ortsfesten Nestteil befindlichen Formteil entfernt wird und erst anschließend das Formteil aus dem Nestteil ausgestoßen wird. Hierzu können hydraulisch betätigte Kolben verwendet werden, die in Spritzdüsen in dem Nestteil verschiebbar gelagert sind. Somit ist die Spritzdüsenkonstruktion aufwendig. Es ist also das Nestteil auf der Spritzseite angeordnet, so daß die Spritzdüsen in dem Nestteil mit dem Formraum in Spritzmasse leitender Verbindung stehen. Es können von einem sogenannten Spritzbalken beispielsweise mindestens zwei Düsen abgehen, welchen die Spritzmasse durch den Spritzbalken zugeführt wird. Gegebenenfalls sind zum Auswerfen des gespritzten Formteils aus dem Nestteil in dem ortsfesten Spritzteil Luftauswerfer vorgesehen.

Auch eine andere Anordnung von mechanischen Auswerfern als die bekannten Kolben in den Spritzdüsen in dem Spritzteil würde auf erhebliche konstruktive Schwierigkeiten stoßen. Mechanische Mittel zum Ausdrücken des Formteils sind deswegen in der Regel in einem gegenüber dem Spritzteil verfahrbaren Schließteil angeordnet, welches den zu dem Nestteil passenden Kern umfaßt.

Um die Wirkung von Druckkraft zum Entfernen von Preßstücken aus einer Preßform zu steigern, ist es seit langem bekannt, in der Wandlung wenigstens eines Formteils ein oder mehrere Druckluftventile vorzusehen, durch deren Öffnen nach beendetem Preßvorgang Druckluft zwischen die Formteile und das Preßstück geführt wird (DE 689514). Aber auch in dieser Preßform wird die Ausstoßwirkung von mechanischen Auswerfern nicht erreicht.

Zum Stand der Technik gehört weiterhin eine ventilgesteuerte Spritzgußanlage, bei der in einer Hohlraumplatte Düsen angeordnet sind, die an einen Verteilerleitungsblock angebracht sind und sich durch eine Öffnung in der Hohlraumplatte erstrecken (DE 3739803A1). Einläufe der Düsen führen alle zu einem Formhohlraum, der einerseits durch die Hohlraumplatte und andererseits durch ein weiteres Formteil begrenzt ist. Die Hohlraumplatte kann einen Kernabschnitt umfassen und das weitere Formteil kann als Nestteil ausgebildet sein. - Der Formhohlraum wird über die Einläufe der Düsen mit Schmelze unter Spritzdruck gefüllt. Nachdem Ventilstößel in den Düsen deren Einläufe verschlossen haben und der Spritzdruck aufgehoben ist, wird nach einer Kühlperiode die Form für die Entnahme geöffnet. Es ist im einzelnen nicht ersichtlich, wie die Entnahme erfolgt.

Nachteilig ist bei den bekannten Kunststoffspritzverfahren und entsprechenden Werkzeugen in Spritzgußmaschinen, daß nach dem Spritzen eines Formteils mit außen stark hinterschnittenen Wänden beim Ausfahren des Kerns aus dem Nestteil das Formteil in dem Nestteil hängenbleibt und aufgrund der Hinterschneidungen nicht gelöst werden kann. Mittel zum Ausdrücken bzw. Auswerfen des Formteils von dem herausgefahrenen Kern, die auf der Schließseite angeordnet sind, können in solchen Fällen nicht nützen. Übliche bekannte Kunststoffspritzverfahren, welche gegenüber ebenfalls bekannten Schleuderverfahren schneller und preisgünstiger sind, lassen sich daher zum Spritzen einseitig offener Hohlkörper mit Hinterschneidungen der Außenwand nicht ohne weiteres einsetzen.

Hierzu können allerdings spezielle geeignete Werkzeuge einer Spritzgußmaschine Seitenschieber aufweisen, um Backen des Nestteils zurückzuziehen. Diese Lösung ist jedoch konstruktiv aufwendig.

Der vorliegenden Erfindung liegt daher die Aufgabe zugrunde, das Kunststoffspritzverfahren der eingangs genannten Gattung so weiterzuentwikkeln, daß es auch zum Spritzen einseitig offener Hohlkörper mit selbst starken Hinterschneidungen der Außenwände geeignet ist, indem das Ausdrükken oder Entfernen des gespritzten Formteils aus der Spritzform in unkomplizierter Weise gewährleistet wird.

Geeignete Werkzeuge für eine solche Spritzgußmaschine sollen sich durch einen konstruktiv günstigen, robusten Aufbau auszeichnen.

Die erstgenannte Aufgabenstellung wird für das Kunststoffspritzverfahren nach dem Oberbegriff des Anspruchs 1 mit den Verfahrensmerkmalen gemäß dem kennzeichnenden Teil des Anspruchs 1 gelöst.

Die erfindungsgemäßen Werkzeuge der Spritzgußmaschine, mit denen das Kunststoffspritzverfahren ausgeübt werden kann, weisen die Merkmale des Anspruchs 5 auf.

Nach dem erfindungsgemäßen Verfahren wird das Formteil umgekehrt wie üblich nicht von außen ausgehend von dem Boden her gespritzt, sondern von innen. Zum Lösen des Formteils aus der Spritzform wird nicht wie üblich angestrebt, das Formteil zusammen mit dem Kern aus dem Nestteil zu lösen, um anschließend das Formteil von dem Kern abzustoßen, sondern es wird das Formteil in dem Nestteil, also mit diesem, von dem Kern abgezogen, wonach das Formteil einfach aus dem Nestteil ausgeworfen werden kann, indem primär an dem Nestteil angeordnete Luftauswerfer nach Anspruch 2 aktiviert werden. Das Ausdrücken kann dabei gemäß Anspruch 3 durch mechanische Ausdrücker unterstützt werden. Zum Entformen des Formteils aus dem Nestteil wird das Schwinden üblicher thermoplastischer Kunststoffe vorteilhaft genutzt, indem sich das Formteil mit den außen hinterschnittenen Wänden von der angrenzenden Wandung des Nestteils in beschränktem Maße lösen kann.

Das sekundäre mechanische Ausdrücken des Formteils aus dem Nestteil gemäß Anspruch 3 mit Ausdrückern, die eine zuverlässige Trennung des Formteils von dem Nestteil ermöglichen, läßt sich konstruktiv unproblematisch realisieren, siehe auch Anspruch 6.

Das erfindungsgemäße Verfahren schränkt nach Anspruch 4 das Spritzen des Formteils von mehr als einem Punkt aus nicht ein, da die Spritzseite nicht durch mechanische Ausdrücker teilweise belegt ist.

Zum Ausüben der obigen Verfahren geeignete Werkzeuge in einer Spritzgußmaschine sind in Anspruch 5 angegeben. Sie zeichnen sich insbesondere dadurch aus, daß das Nestteil in dem gegenüber dem Spritzteil verfahrbaren Schließteil in einem Wandbereich, der den Formraum begrenzt, Hinterschneidungen aufweist. Das Nestteil kann gemäß Anspruch 6 Luftauswerfer aufweisen, die in den Formraum münden, um das gespritzte Formteil aus dem Nestteil auszuwerfen. Die Luftauswerfer können freizügig und ungestört durch die Anordnung von Spritzmassekanälen in dem Spritzteil angeordnet werden. Letzteres gilt auch, wenn gemäß Anspruch 8 das Spritzteil mehrere Düsen in dem Kern umfaßt, die in den Formraum gerichtet sind. Sekundär zum Ausdrücken des Formteils aus dem Nestteil können nach Anspruch 6 mechanische Ausdrücker in dem Nesteil gelagert sein.

Durch Abkehr von dem bei Werkzeugen einer Spritzgußmaschine üblichen Konstruktionsprinzip, wonach der Kern in dem beweglichen Schließteil enthalten war und das Nestteil in dem ortsfesten Spritzteil angeordnet war, werden die oben im Zusammenhang mit dem Kunststoffspritzverfahren geschilderten Vorteile ermöglicht.

Gemäß obigen Ausführungen kann sich der Kern der Werkzeuge der Spritzgußmaschine dadurch auszeichnen, daß er keine mechanischen Ausdrücker beinhaltet.

Das erfindungsgemäße Kunststoffspritzverfahren und ein wesentlicher Abschnitt zur Ausübung des Spritzgußverfahrens geeigneter Werkzeuge einer Spritzgußmaschine werden im folgenden anhand einer Zeichnung mit zwei Figuren erläutert, woraus sich weitere Vorteile und Einzelheiten der Erfindung ergeben können. Es zeigt:
- Figur 1: einen Querschnitt durch einen oberen bis mittleren Abschnitt der Werkzeuge im geschlossenen Zustand eines Schließteils und
- Figur 2: einen dazu rechtwinkligen Teilschnitt in einer horizontalen Ebene.

Die Darstellungsmaßstäbe in den beiden Figuren sind unterschiedlich.

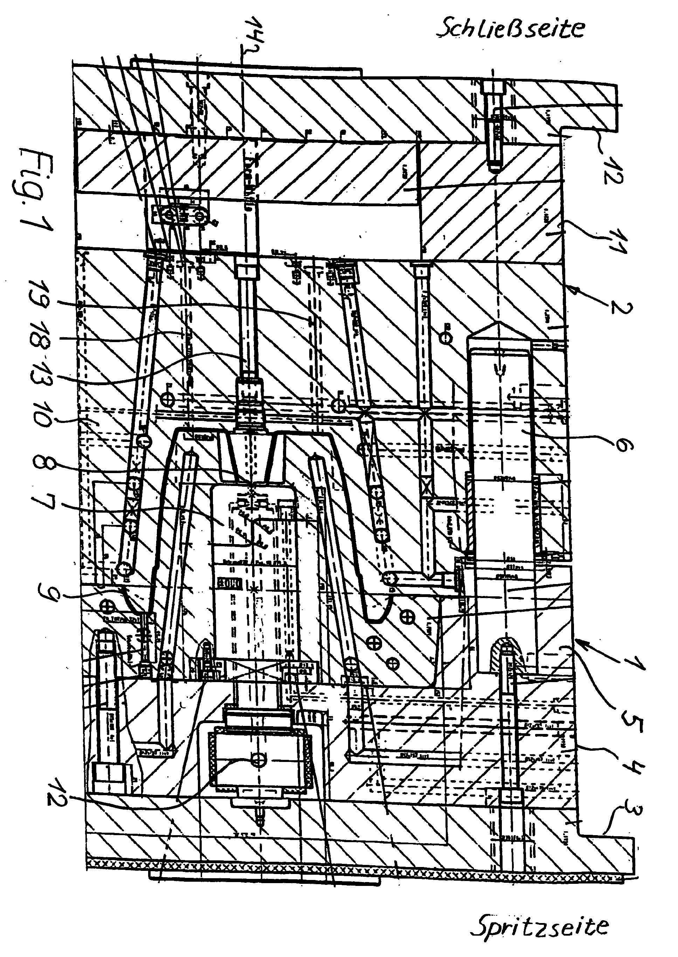

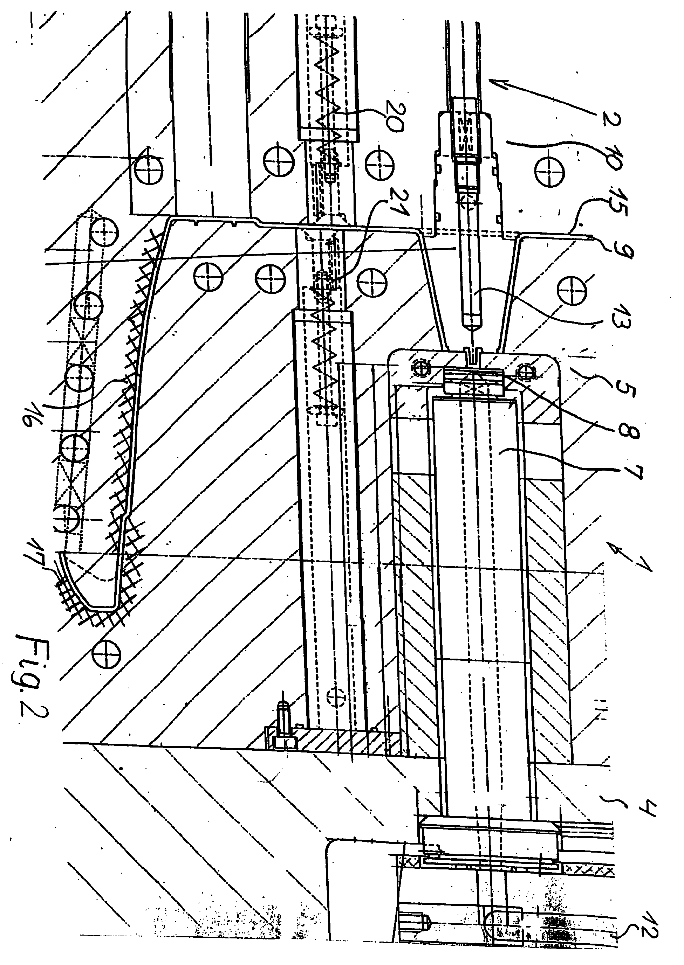

Der in Figur 2 dargestellte Ausschnitt stellt einen Teil von Werkzeugen einer Spritzgußmaschine dar, die insbesondere seitlich, d.h. in der Zeichnung oben, länger ist, wobei sich der in Figur 1 dargestellte Abschnitt symmetrisch zu einer nicht gezeigten Mittelachse wiederholen kann.

In Figur 1 sind rechts eine Spritzseite mit einem ortsfesten Spritzteil 1 und links eine Schließseite mit einem gegenüber dem Spritzteil 1 verfahrbaren Schließteil 2 der Spritzgußmaschine bezeichnet.

Im einzelnen umfaßt das Spritzteil 1 eine Aufspannplatte 3, auf der eine Formplatte 4 mit einem hierin eingesetzten Kern 5 aufgespannt ist. In den Kern ragt eine Düse 7 hinein, und zwar so, daß eine Düsenöffnung 8 in einen Formraum 9 mündet, siehe Fig. 2. Der Formraum 9 ist auf der dem Kern 5 gegenüberliegenden Schließseite 2 mit einem Nestteil 10 abschließbar. Wie aus Figur 2 ersichtlich, mündet in eine Erhebung des Nestteils 10 ein Kühlkanal 13. Weiterhin grenzen an den Formraum 9 je ein Luftauswerfer 20, 21 in dem Nestteil 10 und in dem Kern 5. - Das Nestteil 10 bildet im wesentlichen zusammen mit einem Distanzstück 11 und einer Aufspannplatte 12 das Schließteil 2, welches auf Führungsbolzen, z.B. 6, die von dem Spritzteil 1 herausragen, verschiebbar ist.

Der Formraum 9 ist zu einer horizontalen Mittelebene 14, siehe Figur 1, sowie einer nicht dargestellten senkrechten Mittelebene symmetrisch. Er erweitert sich von einem Boden 15 ausgehend weiter rechts zu einer nicht bezeichneten Seite, die offen wäre, wenn der Kern 5 aus dem Formraum 9 entfernt wäre. Das Nestteil 10 weist in einem Wandbereich 16, der im wesentlichen einer Außenwand des zu spritzenden Formteils entspricht, Strukturen, insbesondere in Form von Hinterschneidungen, auf, siehe Figur 2. In einem kleineren Randbereich 17 des Formteils ist auch der Kern 5 mit entsprechenden Strukturen versehen. Diese Strukturen sind in Figur 2 mit gekreuzter Schraffur gekennzeichnet. In dem Nestteil 10 grenzen ferner mechanische Ausdrücker 18, 19 an den Formraum 9, siehe Figur 1. Sie unterstützen das Auswerfen eines entsprechend dem Formraum 9 gespritzten Formteils zusätzlich zu dem Luftauswerfer 20 in Figur 2.

Zu Beginn eines Spritzvorgangs wird ein heißes Thermoplast als Spritzmasse über einen Kanal 22 den Düsen, z.B. 7, zugeführt, wodurch der Formraum 9 mit Spritzmasse gefüllt wird und ein entsprechendes Formteil bildet.

Zum Entformen nach Abschluß des Spritzvorgangs wird das Nestteil 10 nach links geschoben, wobei das gespritzte Formteil insbesondere wegen der Struktur mit Hinterschneidungen des Wandbereichs 16 in dem Nestteil 10 hängen bleibt und von dem Kern 5 abgezogen wird. Nachdem das Nestteil 10 mit dem Formteil in dieser Weise von dem Kern 5 abgezogen wurde, kann das Formteil unproblematisch von dem Nestteil 10 entformt werden, indem es durch Druckluft aus den Luftauswerfern, z.B. 20, unterstützt durch die Ausdrücker 18, 19, aus dem Nestteil 10 gedrückt wird. Die dabei aufzubringenden Kräfte sind verhältnismäßig gering, da das erkaltende Formteil in begrenztem Maße schrumpft und sich somit dessen Wand mit dem Wandbereich 16 nach Entfernung aus dem Kern selbsttätig etwas nach innen verformt und zum Teil von der Wand des Nestteils 10 löst.

Nach diesem Verfahren lassen sich beispielsweise Blumenkästen spritzen, die nicht nur bei geringem Materialaufwand infolge der Formgebung der Wände robust sind, sondern auch ästhetisch besonders ansprechend sind.

### Bezugszahlenliste

- 1: Spritzteil
- 2: Schließteil
- 3: Aufspannplatte
- 4: Formplatte
- 5: Kern
- 6: Führungsbolzen
- 7: Düse
- 8: Düsenöffnung
- 9: Formraum
- 10: Nestteil
- 11: Distanzstück
- 12: Aufspannplatte
- 13: Kühlkanal
- 14: horizontale Mittelebene
- 15: Boden
- 16: Wandbereich
- 17: Randbereich
- 18: Ausdrücker
- 19: Ausdrücker
- 20: Luftauswerfer
- 21: Luftauswerfer
- 22: Kanal für Spritzmasse

## Patentansprüche

1. Kunststoffspritzverfahren zum Spritzen von einseitig offenen Hohlkörpern als Formteile, bei dem jeweils ein Formteil zwischen einem inneren Kern und einem äußeren Nestteil gespritzt wird und anschließend das Formteil von dem Nestteil und dem Kern getrennt wird, wobei nach dem Spritzen des Formteils dieses aus dem Nestteil ausgedrückt wird,
**dadurch gekennzeichnet,**
**daß** das Spritzen des Formteils von dessen Innenseite her erfolgt und daß nach dem Spritzen des Formteils dieses zusammen mit dem Nestteil von dem Kern, der ortsfest gehalten wird, abgezogen wird und anschließend das Ausdrücken des Formteils aus dem Nestteil erfolgt.

2. Kunststoffspritzverfahren nach Anspruch 1,
**dadurch gekennzeichnet,**
**daß** das Ausdrücken des Formteils aus dem Nestteil mit Druckluft erfolgt.

3. Kunststoffspritzverfahren nach Anspruch 2,
**dadurch gekennzeichnet,**
**daß** das Ausdrücken des Formteils aus dem Nestteil mit mechanischen Ausdrückern unterstützt wird.

4. Kunststoffspritzverfahren nach einem der Ansprüche 1 bis 3,
**dadurch gekennzeichnet,**
**daß** das Formteil von mehr als einem Punkt aus gespritzt wird.

5. Werkzeuge einer Spritzgußmaschine zum Spritzen von einseitig offenen Hohlkörpern als Formteile aus Kunststoff gemäß dem Verfahren nach einem der Ansprüche 1 - 4, wobei die Werkzeuge ein ortsfestes Spritzteil (1) auf einer Spritzseite der Spritzgußmaschine und ein gegenüber dem Spritzteil (1) verfahrbares Schließteil (2) umfassen, wobei in der das Spritzteil (1) und das Schließteil (2) umfassenden Gesamtheit ein Nestteil (10) und ein Kern (5) enthalten sind, die im geschlossenen Zustand der Gesamtheit einen Formraum (9) bilden, wobei der Kern (5) in dem Spritzteil (1) angeordnet ist und das Nestteil (10) in dem Schließteil (2) enthalten ist und wobei das Nestteil (10) in einem Wandbereich (16), der den Hohlraum begrenzt, Hinterschneidungen aufweist.

6. Werkzeuge nach Anspruch 5,
**dadurch gekennzeichnet,**
**daß** das Nestteil (10) in dem Schließteil (2) Luftauswerfer (20) aufweist, die in den Formraum (9) münden.

7. Werkzeuge nach Anspruch 6,
**dadurch gekennzeichnet,**
**daß** mechanische Auswerfer (18, 19) in dem Nestteil (10) gelagert sind.

8. Werkzeuge nach wenigstens einem der Ansprüche 5 bis 7,
**dadurch gekennzeichnet,**
**daß** das Spritzteil (1) mindestens eine Düse (7) in dem Kern (5) umfaßt, die in den Formraum (9) gerichtet ist, der zwischen dem Kern (5) und dem Nestteil (10) eingeschlossen ist.
